(19) **Europäisches Patentamt**
**European Patent Office**
**Office européen des brevets**

(11) **EP 3 271 735 B1**

(12) **EUROPEAN PATENT SPECIFICATION**

(45) Date of publication and mention
of the grant of the patent:
**13.11.2019 Bulletin 2019/46**

(21) Application number: **15885750.8**

(22) Date of filing: **14.07.2015**

(51) Int Cl.:
**G01R 23/16** (2006.01)   **H04B 7/0413** (2017.01)

(86) International application number:
**PCT/US2015/040334**

(87) International publication number:
**WO 2016/148734 (22.09.2016 Gazette 2016/38)**

(54) **SPECTRAL ANALYSIS SIGNAL IDENTIFICATION**

SPEKTRALANALYSESIGNALIDENTIFIKATION

IDENTIFICATION DE SIGNAL D'ANALYSE SPECTRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2015 US 201562135298 P**

(43) Date of publication of application:
**24.01.2018 Bulletin 2018/04**

(73) Proprietor: **CommScope Technologies LLC Hickory, NC 28602 (US)**

(72) Inventors:
• **LI, Zhao**
  **Forest, VA 24551 (US)**

• **WALKUP, Kevin D.**
  **Forest, VA 24551 (US)**

(74) Representative: **Abel & Imray**
**Westpoint Building**
**James Street West**
**Bath BA1 2DA (GB)**

(56) References cited:
**US-A- 3 984 669          US-A1- 2008 069 252**
**US-A1- 2009 154 585     US-A1- 2009 302 829**
**US-A1- 2013 177 317     US-A1- 2015 016 441**
**US-B2- 8 111 608**

**Description**

Technical Field

The present disclosure relates generally to telecommunications and more specifically to the use of spectral analysis in identifying signals in a telecommunications system.

Background

In telecommunications systems, such as digital distributed antenna systems or digital repeaters, base station signals of various modulation types within different frequency bands may need to be identified. When a telecommunications system is commissioned or otherwise installed, a system-wide scanning process may be implemented to identify the signal types and bands. The scanning process may be implemented per telecommunications port and band-by-band. Among other things, the scanning process may discover each signal's modulation type, downlink or uplink center frequency, bandwidth, cell ID, mobile country code or mobile network code, and antenna port information (e.g., if it is of a multiple-input-multiple-output (MIMO) configuration).

US 2015/016441 A1 (Hanson et al) published 15 January 2015 relates to method and systems for automatically configuring a distributed antenna system. A configuration sub-system of the distributed antenna system can identify signal parameters for downlink signals received from one or more base stations via inputs of a unit in the distributed antenna system. The configuration sub-system can automatically determine a configuration plan for the distributed antenna system based on the automatically identified signal parameters. The configuration plan specifies how to combine subsets of the downlink signals for routing to remote antenna units.

US 3984669 A (Lehmann et al) published 5 October 1976 relates to a fully digital spectrum analyzer accepting as an input either an analog signal or a series of digital numbers and using time compression and DFT (Discrete Fourier Transform) techniques to provide the spectral component values of the input signal.

Summary

According to one aspect of the present disclosure, there is provided a method, as defined in the appended claims.

According to another aspect, there is provided a measurement receiver as defined in the appended claims.

According to another aspect, there is provided a telecommunications system according to the appended claims.

These illustrative aspects and features are mentioned not to limit or define the disclosure, but to provide examples to aid understanding of the concepts disclosed herein. Other aspects, advantages, and features of the present disclosure will become apparent after review of the entire application.

Brief Description of the Drawings

FIG. 1 is a block diagram of a telecommunications system with a measurement receiver according to one example.
FIG. 2 is a flowchart depicting a process for identifying signals in a telecommunications system according to one example.
FIG. 3 depicts a power spectrum of results of processing signals from a first port of a telecommunications system according to one example.
FIG. 4 depicts a power spectrum of results of processing signals from the first port of a telecommunications system after a bandwidth of signals has been identified according to one example.
FIG. 5 depicts a power spectrum of results of processing signals from a second port of a telecommunications system according to one example.
FIG. 6 depicts a power spectrum of results of processing signals from the second port of a telecommunications system after a bandwidth of signals has been identified according to one example.

Detailed Description

Certain aspects and features relate to performing spectral analysis in a telecommunications system to confirm the presence of a MIMO signal prior to decoding signals to avoid decoding spectrum that does not include MIMO signals. Multiple copies of spectra from ports of the telecommunications system may be checked to confirm a MIMO 4x4 (four input, four output) or MIMO 2x2 (two input, two output) configuration prior to decoding attempts to save scan time spent on these new modulation types. Non-MIMO signals or other signals of another modulation type (e.g., LTE single-input-single-output (SISO)) may be decoded only if there are no signs of MIMO signals in the spectra.

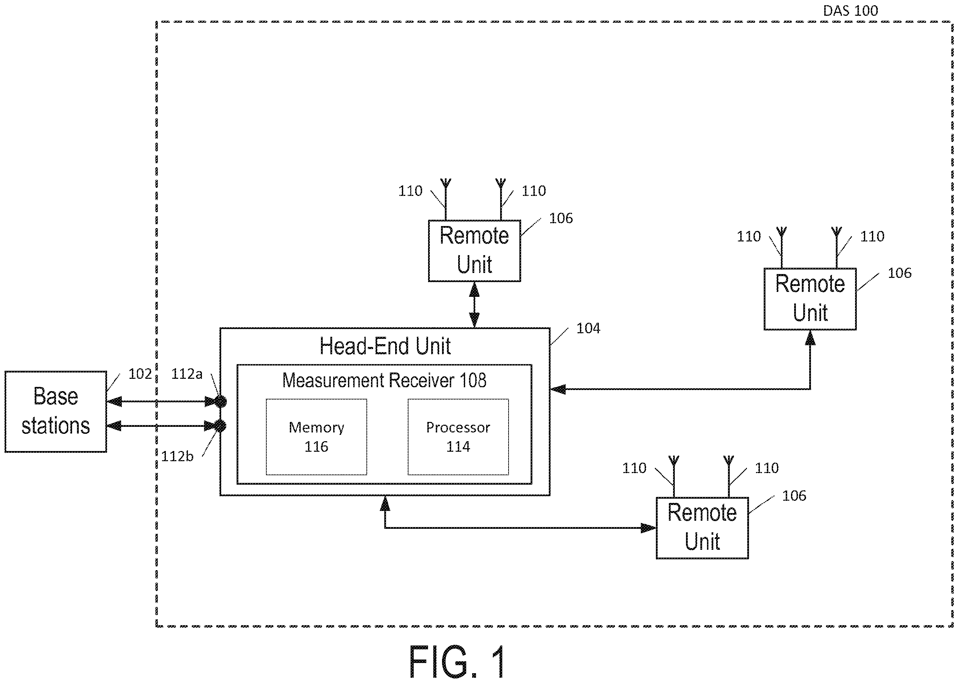

Decoding a signal may involve locating the center frequency and estimating the bandwidth. The center frequency and bandwidth may be confirmed by locating a pilot signal associated with the signal and decoding a downlink broadcast channel (BCH) of the carrier. But, the time to locate the pilot signal and decode the BCH of the carrier may be a fixed time for each modulation type. Decoding only MIMO signals, when present, may decrease this overall time and may enhance the user experience of the system. A telecommunications system may include a distributed antenna system ("DAS") or a repeater. For example, FIG. 1 illustrates an example of a telecommunications system that is a DAS 100 communicatively coupled to one or more base stations 102. The DAS 100 may communicate signals between the base stations 102 and terminal devices (not shown) in one or more coverage zones serviced by the DAS 100. The terminal devices may be electronic devices used to communicate voice or data wirelessly within the DAS 100. The DAS 100 may communicate signals to terminal devices via a head-end unit 104 and remote units 106 that service the coverage zones. The head-end unit 104 may be communicatively coupled with the remote units 106 in any suitable manner. Communicatively coupling devices in a DAS 100 or other telecommunications system may involve establishing, maintaining, or otherwise using a communication link (e.g., a cable, an optical fiber, a wireless link, etc.) to communicate information between the devices.

The head-end unit 104 may receive downlink signals from the base stations 102 or transmit uplink signals to the base stations 102. Any suitable communication link may be used for communication between the base stations 102 and the head-end unit 104. Examples of suitable communication links may include copper cable, an optical fiber, another suitable communication medium, a wireless RF communication link, or a microwave link. The head-end unit 104 may include a measurement receiver 108 for detecting the presence of signals of a particular type and band received from the base stations 102. In some examples, the measurement receiver 108 may be implemented in a field-programmable gate array ("FPGA").

The remote units 106 may provide signal coverage in the coverage zones. The remote units 106 may include transceiving devices that may include or be communicatively coupled to one or more antennas 110. Providing signal coverage in the coverage zones can include wirelessly transmitting downlink signals received from the head-end unit 104 to terminal devices in the coverage zones. Providing signal coverage in the coverage zones may also include wirelessly receiving uplink signals from the mobile communication devices or other terminal devices in the coverage zones. The remote units 106 may transmit the uplink signals to the head-end unit 104.

The measurement receiver 108 may be communicatively coupled to two or more ports 112a, 112b through circuitry that may include digitization circuitry for digitizing signals received from base stations. The ports 112a, 112b may be communicatively coupled to the base stations 102. The measurement receiver 108 may include a processor 114 for executing the spectral analysis of the signals. The processor 114 may include any processing device or group of processing devices for executing program code or other instructions stored in a memory 116. Examples of the processor 114 may include a microprocessor, an application-specific integrated circuit ("ASIC"), a field-programmable gate array ("FPGA"), or other suitable processor. The memory 116 can include, for example, a non-transitory computer-readable medium.

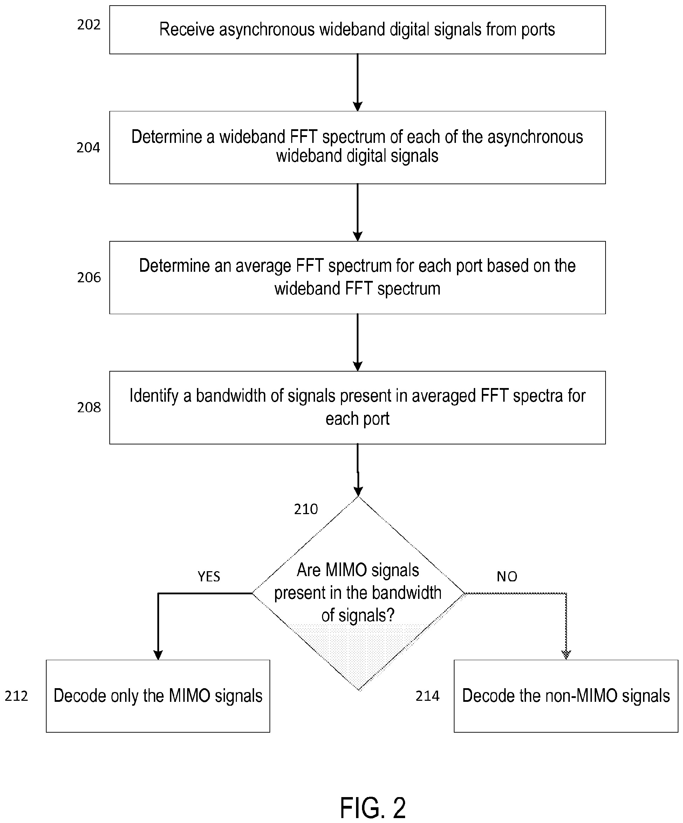

FIG. 2 is a flow chart depicting an example of a process for detecting types and bands of signals received by a DAS from a base station. The process of FIG. 2 is described with reference to the system in FIG. 1, although other implementations of the process are possible without departing from the scope of the present disclosure.

In block 202, the measurement receiver 108 receives asynchronous wideband digital signals (e.g., up to 100 MHz baseband) from ports of the head-end unit 104. The asynchronous wideband digital signals may be received from ports 112a, 112b, as supported by the head-end unit 104 hardware. The wideband digital signals may be received from the ports 112a, 112b at different points in time or on an interval basis - e.g., interleaved. The interval of capture and the number of captures from each port 112a, 112b may be pre-set by software or other controls in the memory 116 of the measurement receiver 108.

A fast Fourier transformation (FFT) process may be performed on the captured digital signals. As an example, for a 100 MSPS sample rate with 32768 samples in the time domain, the frequency domain resolution may be approximately 6 KHz per FFT bin. This resolution may allow the measurement receiver 108 to identify spectra for various modulation types detected by the system.

In this example, $A_i^{(p)} = \left\{ a_i^{(p)}(0), a_i^{(p)}(1), \cdots\cdots, a_i^{(p)}(N-1) \right\}$ may be the $i^{th}$ time domain capture from port 112a, represented in the equation by *p,* where $a_i^{(p)}(0)$ is a complex sample from port *p* at time index 0 within the $i^{th}$ capture and where = 0,1,2,$\cdots$,7, *p* = 1,2,3,4 (for a MIMO 4x4) and *N* = 32768. The processor 114 of the measurement receiver 108 may be executed to perform the following captures, one after the other, into the memory 116. Even though time indexes 0,1,2, $\cdots\cdots,N$ - 1 may be used repeatedly in representing captures, in some aspects, these samples may not be time-aligned, but instead occur sequentially in time:

$$A_0^{(1)}, A_0^{(2)}, A_0^{(3)}, A_0^{(4)}, A_1^{(1)}, A_1^{(2)}, A_1^{(3)}, A_1^{(4)}, \cdots \cdots, A_7^{(1)}, A_7^{(2)}, A_7^{(3)}, A_7^{(4)}$$

where, $A$ represents a capture, where the subscript represents a capture index and the superscript represents port number.

Each capture may take less than a subframe (e.g., 1 ms), so the eight captures on port $p$ may be spread out across multiple frames. Transient traffic activities in one subframe may not drastically affect the overall spectrum. The time between captures of $A_i^{(p)}$ may be adjusted by software in the memory of the measurement receiver to capture spectra over time. In some aspects, the total number of captures per port 112a, 112b, (e.g., eight) may be adjustable.

In block 204, the measurement receiver determines a wideband FFT spectrum for each of the received signals. This may represent a power spectrum of the signals received in each port 112a, 112b. In some aspects, the wideband FFT spectrum may be determined using a windowing technique. Windowing may be a signal processing technique used to smooth data, such as by removing effects introduced in truncating data by the FFT process. Various types of windowing functions may be used for calculating a wideband FFT spectrum (e.g., a Blackman-Harris window function, a Hamming, Hanning, Bartlett and Blackman window function).

For example, a symmetric four-term Blackman-Harris window may include a length $N$ = 32768 that may be used to suppress side lobes through truncation. The Blackman-Harris window may provide over 90 dB side-lobe suppression to generate a clean spectrum. The Blackman-Harris window function may be represented as:

$$w(n) = k_0 - k_1 \cos\left(\frac{2\pi n}{N-1}\right) + k_2 \cos\left(\frac{4\pi n}{N-1}\right) - k_3 \cos\left(\frac{6\pi n}{N-1}\right) \quad 0 \le n \le N-1,$$

where $k_0$ = 0.35875, $k_1$ = 0.48829, $k_2$ = 0.14128, $k_3$ = 0.01168, $and$ $n$ = a software - selected sample index. $B_i^{(p)} = \left\{ b_i^{(p)}(0), b_i^{(p)}(1), \cdots \cdots, b_i^{(p)}(N-1) \right\}$ may be the $i^{th}$ windowed time sequence of the capture from port ($p$), where $b_i^{(p)}(j) = w(j)a_i^{(p)}(j)$, $0 \le j \le N$ - 1.

An FFT process may be performed on each of the windowed time sequences (4x8 in the case of MIMO 4x4 and 2x8 in the case of MIMO 2x2) to produce 32768 points of symmetric frequency domain representation. Of the 32768 points, only 16384 positive frequency points may be used in the spectral analyses. For example, $C_i^{(p)} = \left\{ c_i^{(p)}(0), c_i^{(p)}(1), \cdots \cdots, c_i^{(p)}(M-1) \right\}$ may be the $i^{th}$ positive spectrum power from port ($p$), calculated by taking a length $N$ FFT and the norm squared of each positive frequency term (0 to M-1) in the FFT result. The power spectrum may be denoted as:

$$C_i^{(p)} = \left\| FFT\left(B_i^{(p)}\right)_0^{M-1} \right\|^2$$

In block 206, the measurement receiver may determine an average FFT spectrum for the wideband FFT spectrum of each port. In some examples, the average FFT spectrum may be calculated over time and filtered for each port based on the frequency of the signals. The output may be an average FFT spectrum per port. The average FFT spectra may be converted to dB using a 10log10 function. A moving average function (e.g., a sliding window) may be applied to smooth the function at each port.

For example, the time averaging of eight spectra from ports 112a, 112b may be represented as: $D^{(p)}$ = $\{d^{(p)}(0), d^{(p)}(1), \cdots \cdots, d^{(p)}(M$ - 1)$\}$, where $M$ = 16384 and $d^{(p)}(j) = \frac{1}{8} \sum_{i=0}^{i=7} c_i^{(p)}(j)$, $0 \le j \le M$ - 1. This may complete the linear time averaging of the eight spectra received at each port 112a, 112b. The average FFT spectrum of the ports 112a, 112b may be converted, respectively, into dB with the 10log10 function. The average FFT spectrum in dB may be represented as $E^{(p)}$ = $\{e^{(p)}(0), e^{(p)}(1), \cdots \cdots, e^{(p)}(M$ - 1)$\}$, where $e^{(p)}(j)$ = $10\log_{10}(d^{(p)}(j))$, $0 \le j \le M$ - 1. The sliding window (of length $L$) type of moving average may be performed on the average FFT spectrum of each port to generate smoothed power spectrum, which may be represented as $F^{(p)} = \{f^{(p)}(0), f^{(p)}(1), \cdots \cdots, f^{(p)}(M - 1)\}$, where

$$f^{(p)}(j) = \frac{1}{L} \sum_{\substack{l=j-L/2 \\ l \geq 0}}^{\substack{l=j+L/2 \\ l \leq M-1}} e^{(p)}(l).$$

The length $L$ of the sliding window may be a programmed value stored in the memory 116. The value of the length may be small enough to avoid destroying the spectral features of the spectrum, but large enough to smooth out sharp spikes (e.g., length 11 or 12). In some aspects, the value for the length may be determined by experiment.

In block 208, the measurement receiver 108 identifies the bandwidth of signals present in averaged FFT spectra. To identify the bandwidth of signals, a "smart" search may be conducted to locate local maximums of power level in the spectrum for each port 112a, 112b. For each local maximum of power level, a search may be performed in a forward direction to determine a "back" of the spectra (e.g., after a drop below a certain threshold, by x-dB). A second search may be performed in the opposite direction to identify a "front" of the spectra (e.g., after a drop, by x-dB). Signals within the appropriate range (x) may be retained for further processing. Signals outside of the range may not be processed. The value x defining the range may be modulation dependent and programmable in the software stored in the memory 116.

For example, an algorithm stored in the memory of the measurement receiver 108 may be implemented by the processor 114 using a known noise floor, radio frequency calibration parameters, and a modulation type for the signal searched. The measurement receiver 108 may search the smoothed power spectrum to find local peaks and their associated power drop points (e.g., a drop by x-dB) around those local peaks. In some examples for packed spectrum of Global System for Mobile Communications ("GSM") or Code Division Multiple Access (e.g., CDMA2K), the value may be set to 8 dB (e.g., x = 8) and for LTE this value can be 20 dB (e.g., x = 20) according to one example.

In block 210 of FIG. 2, the measurement receiver 108 determines whether MIMO signals are present in the bandwidth of signals. This determination may be made based on a power level comparison to determine any overlap with other signals. By identifying similarities among multiple spectra, certain spectra may be identified as not being MIMO. For example, if a spectra does not overlap any other spectra by more than a predetermined threshold (e.g., by 85%) in frequency, then the spectra may be identified as non-MIMO. Similarly, if the integrated signal power of a spectra, as compared to another differs by more than a selected threshold (e.g., by 10 dB), the spectra is identified as non-MIMO. Conversely, if the overlap percentage is over the predetermined threshold and the integrated signal power is within the selected threshold, MIMO signals may be present and the MIMO configuration on the ports 112a, 112b may be confirmed.

In block 212, the measurement receiver 108 decodes only the MIMO signals identified in the bandwidth of signals. The measurement receiver 108 may decode the MIMO signals by locating the center frequency and estimating the bandwidth of the signals. The center frequency and bandwidth may be confirmed by locating a pilot signal associated with each signal and decoding a downlink broadcast channel (BCH) of the carrier. In block 214, the measurement receiver 108 decodes the non-MIMO signals in the bandwidth of signals where no MIMO signals were identified.

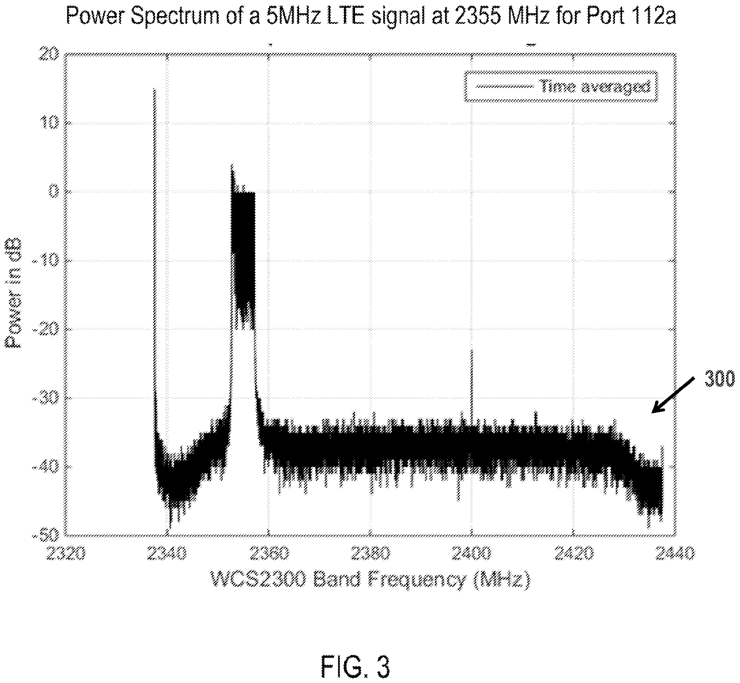

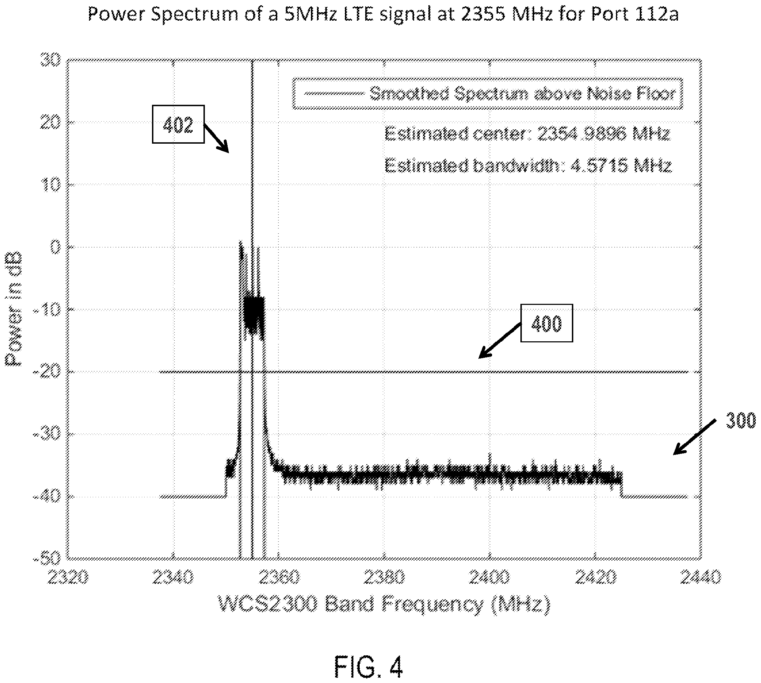

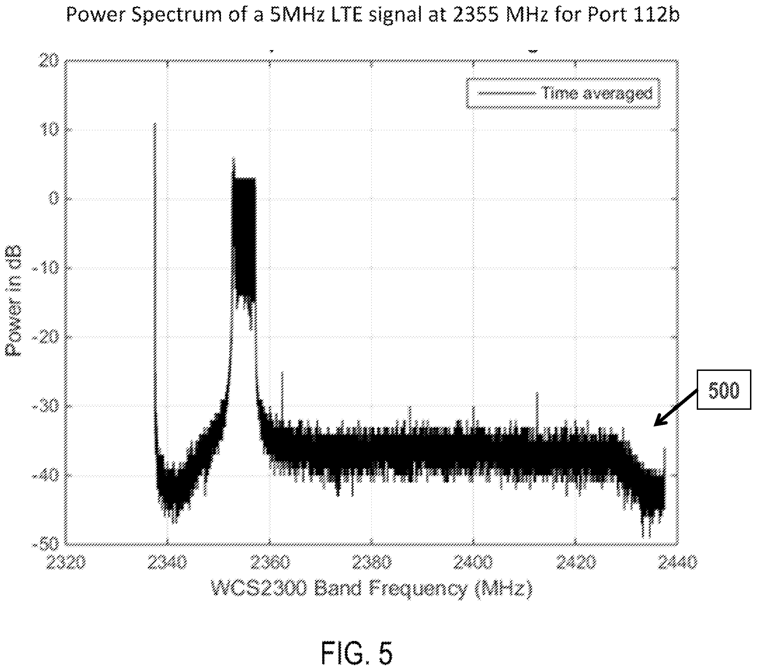

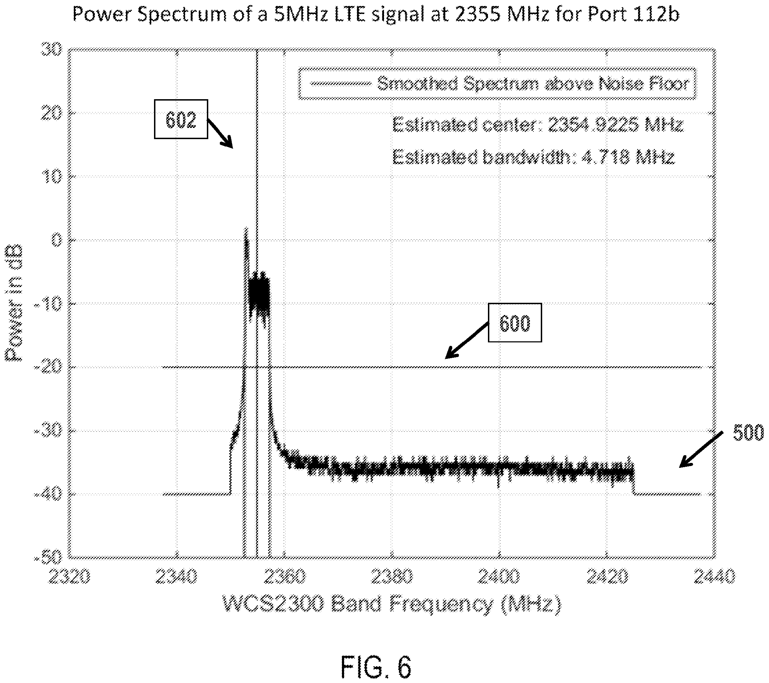

FIGs. 3-6 illustrate examples of processing results of the captured wideband data from an LTE MIMO 2x2 base station 102 subsequent to identifying the bandwidth of signals present in averaged FFT spectra. FIGs. 3 and 4 depict a display of the results from signals associated with the first port 112a of the head-end unit 104. FIGs. 5 and 6 depict a display of results from signals associated with the second port 112b of the head-end unit 104. The spectra displayed in each of FIGs. 3-6 represent a power spectrum 300, 500 of a 5 MHz LTE signal at 2355 MHz for each of the first and second ports 112a, 112b, respectively. The horizontal, or x, axis of the display represents the WCS2300 band frequency in MHz. The vertical, or y, axis of the display represents the power of the LTE signal in dB. FIGs. 3 and 5 depict the results of the power spectrum 300 of the first port 112a and the power spectrum 500 of the second port 112b, respectively, after the signals have been averaged over time. Time averaging may reduce the spectral fluctuations from a single spectrum. In some aspects, the power spectra 300, 500 may further be smoothed (e.g., FIGs. 4 and 6). The smoothed power spectra may be displayed overlapping with or alternatively to the display of the time averaged power spectra 300, 500.

FIGs. 4 and 6 depict results of the power spectra 300, 500 of the first port 112a and the second port 112b, respectively, after bandwidths of the signals have been identified. The power spectra 300, 500 may be smoothed using windowing (e.g., a moving average function). The center frequencies may be estimated by determining where each power spectrum 300, 500 intersects with lines 400, 600, respectively, positioned at -20 dB for LTE signals. The distance of each line 400, 600 along the horizontal axis between the intersection points may represent the estimated center frequencies. The estimated center frequencies may very close to the target and correct if a function of rounding to the nearest 100 KHz is applied to force it on to LTE channel raster.

The channel bandwidth of each port 112a, 112b may be estimated by the local maximum of the power spectra 300, 500. This may be an intersection of lines 402, 602 with the power spectra 300, 500, respectively when lines 402, 602 are positioned halfway between or central to the intersection points of lines 400, 600 with power spectra 300, 500, respectively. The estimated channel bandwidth 402, 602, respectively, may also be accurate since a 5 MHz LTE is 4.5 MHz wide with 300 resource elements at 15 KHz each.

The foregoing description of the examples, including illustrated examples, has been presented only for the purpose of illustration and description and is not intended to be exhaustive or to limit the subject matter to the precise forms disclosed. Numerous modifications, adaptations, and uses thereof will be apparent to those skilled in the art without departing from the scope of this disclosure. The illustrative examples described above are given to introduce the reader to the general subject matter discussed here and are not intended to limit the scope of the disclosed concepts. The scope of the invention is defined by the appended claims.

**Claims**

1. A method, comprising:

   receiving asynchronous wideband digital signals from at least one base station (102), via two or more ports (112a, 112b) of a telecommunications system communicatively coupled to the at least one base station (102);
   determining, for each of the asynchronous wideband digital signals, a wideband fast Fourier transform (FFT) spectrum;
   determining an average FFT spectrum for each of the two or more ports (112a, 112b) based on the wideband FFT spectrum for each of the two or more ports (112a, 112b);
   identifying a bandwidth of signals present in the average FFT spectrum for each of the two or more ports (112a, 112b);
   identifying MIMO signals present in the bandwidth of signals by:

      comparing the bandwidth of signals corresponding to a first port of the two or more ports (112a, 112b) and the bandwidth of signals corresponding to each of the one or more remaining ports of the two or more ports (112a, 112b); and
      filtering out signals in the bandwidth of signals corresponding to the first port that do not overlap with any of the bandwidth of signals corresponding to any of the one or more remaining ports by more than a predetermined threshold; and decoding the MIMO signals.

2. The method of claim 1, wherein decoding the MIMO signals includes decoding, by a measurement receiver (108), only the MIMO signals present in the bandwidth of signals and not decoding non-MIMO signals present in the bandwidth of signals.

3. The method of claim 1, wherein capturing the asynchronous wideband digital signals includes receiving, by a measurement receiver (108), wideband digital signals from the two or more ports (112a, 112b) at varying time intervals and storing signal information representative of the wideband digital signals in a memory of the measurement receiver (108).

4. The method of claim 1, wherein the average FFT spectrum is determined by applying one or more windows to the asynchronous wideband digital signals; and, optionally,
   wherein applying the one or more windows to the asynchronous wideband digital signals includes applying a symmetric four-term Blackman-Harris window to truncate the asynchronous wideband digital signals by minimizing sidelobe levels of the asynchronous wideband digital signals.

5. The method of claim 1, wherein determining the average FFT spectrum includes producing frequency points representative of a frequency domain of the asynchronous wideband digital signals.

6. The method of claim 1, wherein the average FFT spectrum for each of the two or more ports (112a, 112b) is a moving average FFT spectrum, wherein determining the moving average FFT spectrum includes:

   averaging an FFT spectrum for each of the two or more ports (112a, 112b) over a capture time based on the frequency of the signals; and
   applying a sliding window to produce the moving average FFT spectrum.

7. The method of claim 1, wherein identifying the bandwidth of signals includes identifying a local maximum power level for the average FFT spectrum for each of the two or more ports (112a, 112b) by:

> executing a search of the average FFT spectrum in a forward direction for each of the two or more ports (112a, 112b) to determine a first power level drop by a threshold associated with a modulation type of the asynchronous wideband digital signals;
> executing a search of the average FFT spectrum in the opposite direction for each of the two or more ports (112a, 112b) to determine a second power level drop by the threshold; and
> determining a signal bandwidth between the first power level drop and the second power level drop on a frequency axis of the average FFT spectrum.

8. A measurement receiver (108), comprising:

> a receiver having circuitry configured for capturing asynchronous wideband digital signals from two or more ports (112a, 112b) of a telecommunications system at varying time intervals; and
> a processor (114) configured for executing a set of instructions stored in a memory (116) for causing the measurement receiver (108) to:
>
> > determine, for each of the asynchronous wideband digital signals, a wideband fast Fourier transform (FFT) spectrum;
> > determine an average FFT spectrum for each of the two or more ports (112a, 112b);
> > identify a bandwidth of signals present in the average FFT spectrum for each of the two or more ports (112a, 112b);
> > identify MIMO signals present in the bandwidth of signals by:
> >
> > > comparing the bandwidth of signals corresponding to a first port of the two or more ports (112a, 112b) and the bandwidth of signals corresponding to each of one or more remaining ports of the two or more ports (112a, 112b); and
> > > filtering out signals in the bandwidth of signals corresponding to the first port that do not overlap with any of the bandwidth of signals corresponding to any of the one or more remaining ports by more than a predetermined threshold; and
> >
> > decode the MIMO signals.

9. The measurement receiver (108) of claim 8, wherein the processor (114) is configured to cause the measurement receiver (108) to produce frequency points representative of a frequency domain of the asynchronous wideband digital signals.

10. The measurement receiver (108) of claim 8, further comprising:
an interface coupled to a display for graphically displaying the average FFT spectrum for each of the two or more ports (112a, 112b) based on frequency points representative of a frequency domain of the asynchronous wideband digital signals.

11. The measurement receiver (108) of claim 8, wherein the processor (114) is configured to cause the measurement receiver (108) to identify the bandwidth of signals present in the average FFT spectrum for each of the two or more ports (112a, 112b) by identifying one or more local power level maximums in the average FFT spectrum for each of the two or more ports (112a, 112b); and, optionally,
wherein the processor (114) is configured to cause the measurement receiver (108) to identify at least one of the one or more local power level maximums by:

> executing a search of the average FFT spectrum in a forward direction for each of the two or more ports (112a, 112b) to determine a first power level drop by a threshold determined by the set of instructions;
> executing a search of the average FFT spectrum in the opposite direction for each of the two or more ports (112a, 112b) to determine a second power level drop by the threshold determined by the set of instructions; and
> determining a signal bandwidth between the first power level drop and the second power level drop on a frequency axis of the average FFT spectrum.

12. A telecommunications system comprising the measurement receiver of claim 8, wherein the telecommunications system further comprises:

7

a head-end unit (104) configured to be coupled to one or more remote units (106), the head-end unit (104) comprising:

the two or more ports (112a, 112b) for coupling to at least one base station (102), the two or more ports (112a, 112b) being configured to receive the asynchronous wideband digital signals from at least one base station (102); and
the measurement receiver (108).

13. The measurement receiver (108) of claim 8, wherein the measurement receiver (108) is further configured to:

identify non-MIMO signals present in the bandwidth of signals; and
decode the non-MIMO signals based on an absence of the MIMO signals in the bandwidth of signals; and, optionally,
wherein the measurement receiver (108) is configured to identify the non-MIMO signals present in the bandwidth of signals by:

comparing the bandwidth of signals corresponding to the first port of the two or more ports (112a, 112b) and the bandwidth of signals corresponding to each of the one or more remaining ports of the two or more ports (112a, 112b); and
selecting signals in the bandwidth of signals corresponding to the first port that do not overlap with any of the bandwidth of signals corresponding to any of the one or more remaining ports by more than the predetermined threshold.

**Patentansprüche**

1. Verfahren, umfassend:

Empfangen von asynchronen digitalen Breitbandsignalen von mindestens einer Basisstation (102) über zwei oder mehr Anschlüsse (112a, 112b) eines Telekommunikationssystems, das kommunikativ an die mindestens eine Basisstation (102) gekoppelt ist;
Bestimmen eines Breitband-Fast-Fourier-Transformations(FFT)-Spektrums für jedes der asynchronen digitalen Breitbandsignale;
Bestimmen eines durchschnittlichen FFT-Spektrums für jeden der zwei oder mehr Anschlüsse (112a, 112b) basierend auf dem Breitband-FFT-Spektrum für jeden der zwei oder mehr Anschlüsse (112a, 112b);
Identifizieren einer Bandbreite von Signalen, die in dem durchschnittlichen FFT-Spektrum vorhanden sind, für jeden der zwei oder mehr Anschlüsse (112a, 112b);
Identifizieren von MIMO-Signalen, die in der Bandbreite von Signalen vorhanden sind, durch:

Vergleichen der Bandbreite von Signalen, die einem ersten Anschluss der zwei oder mehr Anschlüsse (112a, 112b) entsprechen, und der Bandbreite von Signalen, die jedem des einen oder der mehreren übrigen Anschlüsse der zwei oder mehr Anschlüsse (112a, 112b) entsprechen; und
Herausfiltern von Signalen in der Bandbreite von Signalen, die dem ersten Anschluss entsprechen, die sich nicht um mehr als einen vorbestimmten Schwellenwert mit einer beliebigen der Bandbreite von Signalen überlagern, die einem beliebigen des einen oder der mehreren Anschlüsse entsprechen; und
Decodieren der MIMO-Signale.

2. Verfahren nach Anspruch 1, wobei das Decodieren der MIMO-Signale Decodieren von nur den MIMO-Signalen, die in der Bandbreite von Signalen vorhanden sind, und nicht Decodieren von Nicht-MIMO-Signalen, die in der Bandbreite von Signalen vorhanden sind, durch einen Messwertaufnehmer (108) beinhaltet.

3. Verfahren nach Anspruch 1, wobei das Erfassen der asynchronen digitalen Breitbandsignale Empfangen von digitalen Breibandsignalen von den zwei oder mehr Anschlüssen (112a, 112b) in variierenden Zeitabständen von einem Messwertaufnehmer (108) und Speichern der Signalinformationen, die für die digitalen Breitbandsignale repräsentativ sind, in einem Speicher des Messwertaufnehmers (108) beinhaltet.

4. Verfahren nach Anspruch 1, wobei das durchschnittliche FFT-Spektrum durch Anwenden von einem oder mehreren Fenstern auf die asynchronen digitalen Breitbandsignale bestimmt wird; und
gegebenenfalls,

wobei das Anwenden des einen oder der mehreren Fenster auf die asynchronen digitalen Breitbandsignale Anwenden eines symmetrischen viergliedrigen Blackman-Harris-Fensters beinhaltet, um die asynchronen digitalen Breitbandsignale zu kürzen, indem Nebenkeulenpegel der asynchronen digitalen Breitbandsignale minimiert werden.

5. Verfahren nach Anspruch 1, wobei das Bestimmen des durchschnittlichen FFT-Spektrums Erzeugen von Frequenzpunkten, die für einen Frequenzbereich der asynchronen digitalen Breitbandsignale repräsentativ sind, beinhaltet.

6. Verfahren nach Anspruch 1, wobei das durchschnittliche FFT-Spektrum für jeden der zwei oder mehr Anschlüsse (112a, 112b) ein bewegliches durchschnittliches FFT-Spektrum ist, wobei das Bestimmen des beweglichen durchschnittlichen FFT-Spektrums Folgendes beinhaltet:

Mitteln eines FFT-Spektrums für jeden der zwei oder mehr Anschlüsse (112a, 112b) über eine erfasste Zeit basierend auf der Frequenz der Signale; und
Anwenden eines verschiebbaren Fensters, um das bewegliche durchschnittliche FFT-Spektrum zu erzeugen.

7. Verfahren nach Anspruch 1, wobei das Identifizieren der Bandbreite von Signalen Identifizieren eines lokalen maximalen Leistungspegels für das durchschnittliche FFT-Spektrum für jeden der zwei oder mehr Anschlüsse (112a, 112b) beinhaltet, und zwar durch:

Ausführen einer Suche des durchschnittlichen FFT-Spektrums in eine Vorwärtsrichtung für jeden der zwei oder mehr Anschlüsse (112a, 112b), um einen ersten Leistungspegelabfall um einen Schwellenwert, der mit einem Modulationstyp der asynchronen digitalen Breitbandsignale assoziiert ist, zu bestimmen;
Ausführen einer Suche des durchschnittlichen FFT-Spektrums in die entgegengesetzte Richtung für jeden der zwei oder mehr Anschlüsse (112a, 112b), um einen zweiten Leistungspegelabfall um den Schwellenwert zu bestimmen;
Bestimmen einer Signalbandbreite zwischen dem ersten Leistungspegelabfall und dem zweiten Leistungspegelabfall an einer Frequenzachse des durchschnittlichen FFT-Spektrums.

8. Messwertaufnehmer (108), umfassend:

einen Aufnehmer mit einer Schaltung, die dazu konfiguriert ist, asynchrone digitale Breitbandsignale von zwei oder mehr Anschlüssen (112a, 112b) eines Telekommunikationssystems in variierenden Zeitabständen zu erfassen; und
einen Prozessor (114), der dazu konfiguriert ist, eine Reihe von Anweisungen, die in einem Speicher (116) gespeichert sind, auszuführen, um den Messwertaufnehmer (108) zu Folgendem zu veranlassen:

Bestimmen eines Breitband-Fast-Fourier-Transformations(FTT)-Spektrums für jedes der asynchronen digitalen Breitbandsignale;
Bestimmen eines durchschnittlichen FFT-Spektrums für jeden der zwei oder mehr Anschlüsse (112a, 112b);
Identifizieren einer Bandbreite von Signalen, die in dem durchschnittlichen FFT-Spektrum vorhanden sind, für jeden der zwei oder mehr Anschlüsse (112a, 112b);
Identifizieren von MIMO-Signalen, die in der Bandbreite von Signalen vorhanden sind, durch:

Vergleichen der Bandbreite von Signalen, die einem ersten Anschluss der zwei oder mehr Anschlüsse (112a, 112b) entsprechen, und der Bandbreite von Signalen, die jedem von einem oder mehreren übrigen Anschlüssen der zwei oder mehr Anschlüsse (112a, 112b) entsprechen; und
Herausfiltern von Signalen in der Bandbreite von Signalen, die dem ersten Anschluss entsprechen, die sich nicht um mehr als einen vorbestimmten Schwellenwert mit einer beliebigen der Bandbreite von Signalen überlagern, die einem beliebigen des einen oder der mehreren übrigen Anschlüsse entsprechen; und
Decodieren der MIMO-Signale.

9. Messwertaufnehmer (108) nach Anspruch 8, wobei der Prozessor (114) dazu konfiguriert ist, den Messwertaufnehmer (108) dazu zu veranlassen, Frequenzpunkte zu erzeugen, die für einen Frequenzbereich der asynchronen digitalen Breitbandsignale repräsentativ sind.

10. Messwertaufnehmer (108) nach Anspruch 8, ferner umfassend:
eine Schnittstelle, die an eine Anzeige gekoppelt ist, um das durchschnittliche FFT-Spektrum für jeden der zwei oder mehr Anschlüsse (112a, 112b) basierend auf Frequenzpunkten, die für einen Frequenzbereich der asynchronen digitalen Breitbandsignale repräsentativ sind, grafisch anzuzeigen.

11. Messwertaufnehmer (108) nach Anspruch 8, wobei der Prozessor (114) dazu konfiguriert ist, den Messwertaufnehmer (108) dazu zu veranlassen, die Bandbreite von Signalen, die in dem durchschnittlichen FFT-Spektrum vorhanden sind, für jeden der zwei oder mehr Anschlüsse (112a, 112b) zu identifizieren, indem ein oder mehrere lokale maximale Leistungspegel in dem durchschnittlichen FFT-Spektrum für jeden der zwei oder mehr Anschlüsse (112a, 112b) identifiziert werden; und, gegebenenfalls,

wobei der Prozessor (114) dazu konfiguriert ist, den Messwertaufnehmer (108) dazu zu veranlassen, mindestens einen von dem einen oder den mehreren lokalen maximalen Leistungspegeln durch Folgendes zu identifizieren:

Ausführen einer Suche des durchschnittlichen FFT-Spektrums in eine Vorwärtsrichtung für jeden der zwei oder mehr Anschlüsse (112a, 112b), um einen ersten Leistungspegelabfall um einen Schwellenwert, der durch die Reihe von Anweisungen bestimmt wurde, zu bestimmen;

Ausführen einer Suche des durchschnittlichen FFT-Spektrums in die entgegengesetzte Richtung für jeden der zwei oder mehr Anschlüsse (112a, 112b), um einen zweiten Leistungspegelabfall um den Schwellenwert, der durch die Reihe von Anweisungen bestimmt wurde, zu bestimmen; und

Bestimmen einer Signalbandbreite zwischen dem ersten Leistungspegelabfall und dem zweiten Leistungspegelabfall an einer Frequenzachse des durchschnittlichen FFT-Spektrums.

12. Telekommunikationssystem, umfassend den Messwertaufnehmer nach Anspruch 8, wobei das Telekommunikationssystem ferner Folgendes umfasst:

eine Kopfend-Einheit (104), die dazu konfiguriert ist, an eine oder mehrere entfernte Einheiten (106) gekoppelt zu werden, wobei die Kopfend-Einheit (104) Folgendes umfasst:

die zwei oder mehr Anschlüsse (112a, 112b) zum Koppeln an mindestens eine Basisstation (102), wobei die zwei oder mehr Anschlüsse (112a, 112b) dazu konfiguriert sind, die asynchronen digitalen Breitbandsignale von mindestens einer Basisstation (102) aufzunehmen; und

den Messwertaufnehmer (108).

13. Messwertaufnehmer (108) nach Anspruch 8, wobei der Messwertaufnehmer (108) zu Folgendem konfiguriert ist:

Identifizieren von Nicht-MIMO-Signalen, die in der Bandbreite von Signalen vorhanden sind; und

Decodieren der Nicht-MIMO-Signale basierend auf einer Abwesenheit der MIMO-Signale in der Bandbreite von Signalen; und, gegebenenfalls,

wobei der Messwertaufnehmer (108) dazu konfiguriert ist, die Nicht-MIMO-Signale, die in der Bandbreite von Signalen vorhanden sind, durch Folgendes zu identifizieren:

Vergleichen der Bandbreite von Signalen, die dem ersten Anschluss der zwei oder mehr Anschlüsse (112a, 112b) entsprechen, und der Bandbreite von Signalen, die jedem des einen oder der mehreren übrigen Anschlüsse der zwei oder mehr Anschlüsse (112a, 112b) entsprechen; und

Auswählen von Signalen in der Bandbreite von Signalen, die dem ersten Anschluss entsprechen, die sich nicht um mehr als den vorbestimmten Schwellenwert mit beliebigen der Bandbreite von Signalen überlagern, die einem beliebigen des einen oder der mehreren übrigen Anschlüsse entsprechen.

## Revendications

1. Procédé, comprenant les étapes ci-dessous consistant à :

recevoir des signaux numériques à large bande asynchrones en provenance d'au moins une station de base (102), par l'intermédiaire de deux ports ou plus (112a, 112b) d'un système de télécommunication couplé en communication à ladite au moins une station de base (102) ;

déterminer, pour chacun des signaux numériques à large bande asynchrones, un spectre de transformation de Fourier rapide à large bande (FFT) ;

déterminer un spectre de transformation FFT moyen pour chacun desdits deux ports ou plus (112a, 112b) sur la base du spectre de transformation FFT à large bande pour chacun desdits deux ports ou plus (112a, 112b) ;

identifier une largeur de bande de signaux présents dans le spectre de transformation FFT moyen pour chacun desdits deux ports ou plus (112a, 112b) ;

identifier des signaux de type « entrée multiple, sortie multiple », MIMO, présents dans la largeur de bande de signaux :

en comparant la largeur de bande de signaux correspondant à un premier port desdits deux ports ou plus (112a, 112b) et la largeur de bande de signaux correspondant à chacun dudit un ou desdits plusieurs ports restants desdits deux ports ou plus (112a, 112b) ; et

en filtrant des signaux, dans la largeur de bande de signaux correspondant au premier port, lesquels ne présentent pas de chevauchement avec un quelconque signal de la largeur de bande de signaux correspondant à l'un quelconque dudit un ou desdits plusieurs ports restants, de plus qu'un seuil prédéterminé ; et

décoder les signaux MIMO.

2.  Procédé selon la revendication 1, dans lequel l'étape de décodage des signaux MIMO consiste à décoder, par le biais d'un récepteur de mesure (108), uniquement les signaux MIMO présents dans la largeur de bande de signaux, et à ne pas décoder des signaux non-MIMO présents dans la largeur de bande de signaux.

3.  Procédé selon la revendication 1, dans lequel l'étape de réception des signaux numériques à large bande asynchrones consiste à recevoir, par le biais d'un récepteur de mesure (108), des signaux numériques à large bande en provenance desdits deux ports ou plus (112a, 112b), à des intervalles de temps variables, et à stocker des informations de signaux représentatives des signaux numériques à large bande dans une mémoire du récepteur de mesure (108).

4.  Procédé selon la revendication 1, dans lequel le spectre de transformation FFT moyen est déterminé en appliquant une ou plusieurs fenêtres aux signaux numériques à large bande asynchrones ; et, facultativement, dans lequel l'étape d'application de ladite une ou desdites plusieurs fenêtres aux signaux numériques à large bande asynchrones consiste à appliquer une fenêtre de Blackman-Harris à quatre termes symétriques pour tronquer les signaux numériques à large bande asynchrones en minimisant des niveaux de lobes latéraux des signaux numériques à large bande asynchrones.

5.  Procédé selon la revendication 1, dans lequel l'étape de détermination du spectre de transformation FFT moyen inclut l'étape consistant à produire des points de fréquence représentatifs d'un domaine fréquentiel des signaux numériques à large bande asynchrones.

6.  Procédé selon la revendication 1, dans lequel le spectre de transformation FFT moyen pour chacun desdits deux ports ou plus (112a, 112b) est un spectre de transformation FFT à moyenne mobile, dans lequel l'étape de détermination du spectre de transformation FFT à moyenne mobile inclut les étapes ci-dessous consistant à :

moyenner un spectre de transformation FFT pour chacun desdits deux ports ou plus (112a, 112b) sur un temps de capture basé sur la fréquence des signaux ; et

appliquer une fenêtre glissante en vue de produire le spectre de transformation FFT à moyenne mobile.

7.  Procédé selon la revendication 1, dans lequel l'étape d'identification de la largeur de bande de signaux consiste à identifier un niveau de puissance maximum local pour le spectre de transformation FFT moyen pour chacun desdits deux ports ou plus (112a, 112b) :

en exécutant une recherche du spectre de transformation FFT moyen dans une direction vers l'avant pour chacun desdits deux ports ou plus (112a, 112b), en vue de déterminer une première baisse de niveau de puissance, à hauteur d'un seuil associé à un type de modulation des signaux numériques à large bande asynchrones ;

en exécutant une recherche du spectre de transformation FFT moyen, dans la direction opposée, pour chacun desdits deux ports ou plus (112a, 112b), en vue de déterminer une seconde baisse de niveau de puissance, à hauteur du seuil ; et

en déterminant une largeur de bande de signaux entre la première baisse de niveau de puissance et la seconde baisse de niveau de puissance sur un axe de fréquence du spectre de transformation FFT moyen.

8.  Récepteur de mesure (108), comprenant :

un récepteur présentant un montage de circuits configuré de manière à capturer des signaux numériques à large bande asynchrones en provenance de deux ports ou plus (112a, 112b) d'un système de télécommunication, à des intervalles de temps variables ; et

un processeur (114) configuré de manière à exécuter un ensemble d'instructions stockées dans une mémoire (116), en vue d'amener le récepteur de mesure (108) à :

déterminer, pour chacun des signaux numériques à large bande asynchrones, un spectre de transformation de Fourier rapide à large bande (FFT) ;

déterminer un spectre de transformation FFT moyen pour chacun desdits deux ports ou plus (112a, 112b) ;

identifier une largeur de bande de signaux présents dans le spectre de transformation FFT moyen pour chacun desdits deux ports ou plus (112a, 112b) ;

identifier des signaux MIMO présents dans la largeur de bande de signaux :

en comparant la largeur de bande de signaux correspondant à un premier port desdits deux ports ou plus (112a, 112b) et la largeur de bande de signaux correspondant à chacun d'un ou plusieurs ports restants desdits deux ports ou plus (112a, 112b) ; et

en filtrant des signaux, dans la largeur de bande de signaux correspondant au premier port, qui ne sont pas en chevauchement, avec un quelconque signal de la largeur de bande de signaux correspondant à l'un quelconque dudit un ou desdits plusieurs ports restants, de plus d'un seuil prédéterminé ; et

décoder les signaux MIMO.

9. Récepteur de mesure (108) selon la revendication 8, dans lequel le processeur (114) est configuré de manière à amener le récepteur de mesure (108) à produire des points de fréquence représentatifs d'un domaine fréquentiel des signaux numériques à large bande asynchrones.

10. Récepteur de mesure (108) selon la revendication 8, comprenant en outre :
une interface couplée à un afficheur pour afficher graphiquement le spectre de transformation FFT moyen pour chacun desdits deux ports ou plus (112a, 112b) sur la base de points de fréquence représentatifs d'un domaine fréquentiel des signaux numériques à large bande asynchrones.

11. Récepteur de mesure (108) selon la revendication 8, dans lequel le processeur (114) est configuré de manière à amener le récepteur de mesure (108) à identifier la largeur de bande de signaux présents dans le spectre de transformation FFT moyen pour chacun desdits deux ports ou plus (112a, 112b) en identifiant un ou plusieurs maximums de niveau de puissance local dans le spectre de transformation FFT moyen pour chacun desdits deux ports ou plus (112a, 112b) ; et, facultativement,
dans lequel le processeur (114) est configuré de manière à amener le récepteur de mesure (108) à identifier au moins l'un parmi ledit un ou lesdits plusieurs maximums de niveau de puissance local :

en exécutant une recherche du spectre de transformation FFT moyen dans une direction vers l'avant pour chacun desdits deux ports ou plus (112a, 112b), en vue de déterminer une première baisse de niveau de puissance, à hauteur d'un seuil déterminé par l'ensemble d'instructions ;

en exécutant une recherche du spectre de transformation FFT moyen, dans la direction opposée, pour chacun desdits deux ports ou plus (112a, 112b), en vue de déterminer une seconde baisse de niveau de puissance, à hauteur du seuil déterminé par l'ensemble d'instructions ; et

en déterminant une largeur de bande de signaux entre la première baisse de niveau de puissance et la seconde baisse de niveau de puissance sur un axe de fréquence du spectre de transformation FFT moyen.

12. Système de télécommunication comprenant le récepteur de mesure selon la revendication 8, dans lequel le système de télécommunication comprend en outre :
une unité de tête de réseau (104) configurée de manière à être couplée à une ou plusieurs unités distantes (106), l'unité de tête de réseau (104) comprenant :

lesdits deux ports ou plus (112a, 112b) destinés à être couplés à au moins une station de base (102), les deux ports ou plus (112a, 112b) étant configurés de manière à recevoir les signaux numériques à large bande asynchrones en provenance d'au moins une station de base (102) ; et

le récepteur de mesure (108).

13. Récepteur de mesure (108) selon la revendication 8, dans lequel le récepteur de mesure (108) est en outre configuré de manière à :

> identifier des signaux non-MIMO présents dans la largeur de bande de signaux ; et
> décoder les signaux non-MIMO sur la base d'une absence des signaux MIMO dans la largeur de bande de signaux ; et, facultativement,
> dans lequel le récepteur de mesure (108) est configuré de manière à identifier les signaux non-MIMO présents dans la largeur de bande de signaux :

>> en comparant la largeur de bande de signaux correspondant au premier port desdits deux ports ou plus (112a, 112b) et la largeur de bande de signaux correspondant à chacun dudit un ou desdits plusieurs ports restants desdits deux ports ou plus (112a, 112b) ; et
>> en sélectionnant des signaux dans la largeur de bande de signaux correspondant au premier port, lesquels ne présentent pas de chevauchement avec un signal quelconque de la largeur de bande de signaux correspondant à l'un quelconque dudit un ou desdits plusieurs ports restants, de plus que le seuil prédéterminé.

FIG. 1

202 | Receive asynchronous wideband digital signals from ports

204 | Determine a wideband FFT spectrum of each of the asynchronous wideband digital signals

206 | Determine an average FFT spectrum for each port based on the wideband FFT spectrum

208 | Identify a bandwidth of signals present in averaged FFT spectra for each port

210 Are MIMO signals present in the bandwidth of signals?

YES

NO

212 | Decode only the MIMO signals

214 | Decode the non-MIMO signals

FIG. 2

Power Spectrum of a 5MHz LTE signal at 2355 MHz for Port 112a

FIG. 3

Power Spectrum of a 5MHz LTE signal at 2355 MHz for Port 112a

FIG. 4

EP 3 271 735 B1

Power Spectrum of a 5MHz LTE signal at 2355 MHz for Port 112b

FIG. 5

EP 3 271 735 B1

Power Spectrum of a 5MHz LTE signal at 2355 MHz for Port 112b

FIG. 6

EP 3 271 735 B1

**EP 3 271 735 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015016441 A1, Hanson
- US 3984669 A, Lehmann